# EUROPEAN PATENT APPLICATION

(11) **EP 2 273 721 A1**
(43) Date of publication of application: **12.01.2011**
(21) Application number: 09745385.6
(22) Date of filing: 31.03.2009
(51) Int. Cl.: H04L 12/14

(54) **METHOD, CENTRALIZED CONTROL DEVICE AND SYSTEM FOR SERVICE ACCOUNTING**

(30) Priority: 13.05.2008 CN 200810098129
(71) Applicant: Huawei Technologies Co., Ltd., Longgang District, Shenzhen Guangdong 518129 (CN)
(72) Inventor: ZHANG, Yongcang, Longgang District Shenzhen 518129 (CN); REN, Yijun, Longgang District Shenzhen 518129 (CN)
(74) Representative: Kreuz, Georg Maria
(86) International application number: PCT/CN2009/071096
(87) International publication number: WO 2009/138001

(57) **Abstract**

A service charging method includes the following steps. A centralized control point in Service Oriented Architecture (SOA) receives a service request from a service consumer. The centralized control point invokes a requested service for the service consumer according to the service request. The centralized control point generates a Call Detail Record according to an invoked result of the service.

## Description

The application claims the benefit of priority to China Patent Application No. 200810098129.5, filed on May 13, 2008, and entitled "METHOD, CENTRALIZED CONTROL DEVICE, AND SYSTEMs for CHARGING SERVICE", which is incorporated herein by reference in its entirety.

### FIELD OF THE TECHNOLOGY

The present invention relates to the field of Service Oriented Architecture (SOA) technology, and more particularly to a method, a centralized control device in SOA, and a system for charging service.

### BACKGROUND OF THE INVENTION

In a main structure of SOA, a service consumer invokes services provided by a service provider through a centralized control line. Several modes for implementing the SOA exist, for example, the SOA is implemented by using a Web Service. When the SOA is implemented by using the Web Service, a core member is an Enterprise Service Bus (ESB), and the ESB is a centralized control point in the SOA. Each service implemented by using the Web Service is connected to the ESB.

The service consumer completes invoking services provided by the service provider through the ESB. For example, an enterprise acting as a service consumer may invoke services in the enterprise, and may also invoke services provided by an independent service provider through the ESB.

In the implementation of the present invention, the inventors find that in the current SOA, the service provider cannot charge based on the service using situation.

### SUMMARY OF THE INVENTION

The present invention is directed to a service charging method, a charging system, and a centralized control device in SOA, capable of charging for the use of services in the SOA.

In an embodiment, the present invention provides a service charging method, which includes the following steps. A centralized control point in SOA receives a service request from a service consumer. The centralized control point invokes a requested service for the service consumer according to the service request. The centralized control point generates a Call Detail Record (CDR) according to an invoked result of the service.

In an embodiment, the present invention further provides a centralized control device in SOA, which includes a request receiving unit, adapted to receive a service request from a service consumer; a service invoking unit, adapted to invoke a requested service for the service consumer according to the service request; and an accounting unit, adapted to generate a CDR according to an invoked result of the service.

In an embodiment, the present invention further provides a charging/billing system, which includes the centralized control device as described above and a charging/billing server connected to the centralized control device. The charging/billing server is adapted to store a CDR delivered by the centralized control device.

In an embodiment, the present invention further provides a service providing system, which includes a service providing object, and further includes the centralized control device as described above. The service providing object is adapted to provide a requested service for the centralized control device.

It may be known from the present invention that the service consumer invokes a service of the service provider through the centralized control point in the SOA, such that the centralized control point charges based on the invoking situation of the service, thereby realizing charging for the use of the service in the SOA.

### BRIEF DESCRIPTION OF THE DRAWINGS

FIG. 1 is a schematic view of SOA in the prior art;
FIG. 2 is a flow chart of a first embodiment of a service charging method according to the present invention;
FIG. 3 is a flow chart of a second embodiment of the service charging method according to the present invention;
FIG. 4 is a structural view of a first embodiment of a centralized control device in SOA according to the present invention;
FIG. 5 is a structural view of a second embodiment of the centralized control device in the SOA according to the present invention;
FIG. 6 is a structural view of an embodiment of a charging system according to the present invention; and
FIG. 7 is a structural view of an embodiment of a service providing system according to the present invention.

### DETAILED DESCRIPTION OF THE EMBODIMENTS

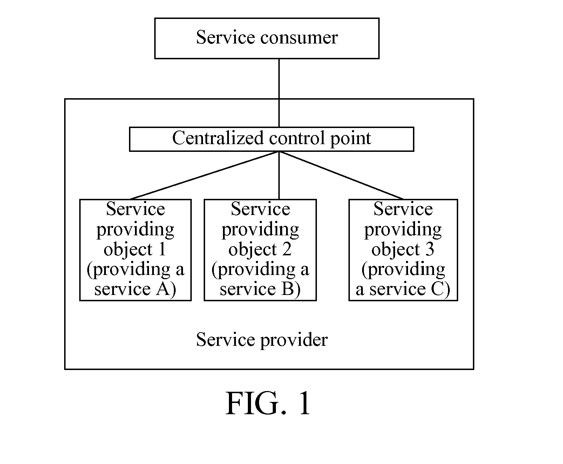

Embodiments and specific implementations of the present invention are described in detail below with reference to the accompanying drawings. FIG. 1 is a schematic view of SOA in the prior art. Technical solutions of the present invention are modified based on the SOA, and reference can be made to the schematic view of the SOA in the description of the embodiments of the present invention. The SOA in FIG. 1 includes a service consumer and a service provider, a centralized control point located on the service provider is connected to a plurality of service providing objects (usually realized by servers), and each service providing object provides a corresponding service.

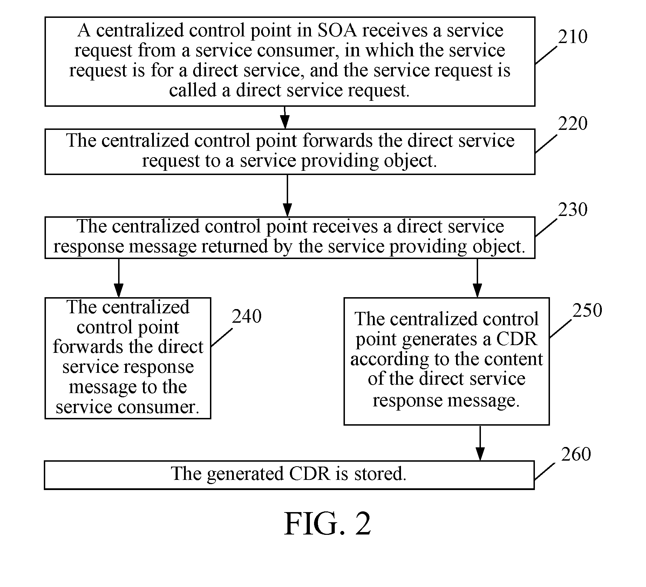

FIG. 2 is a flow chart of a first embodiment of a service charging method according to the present invention.

In Step 210, a centralized control point in SOA receives a service request from a service consumer, in which the service request is for a direct service, and for ease of subsequent description, the service request for the direct service is called a direct service request.

In the following, differences between a direct service and a proxy service in the SOA are simply introduced. The direct service is a specific service implemented by the service provider, and when invoking the direct service, the centralized control point directly sends a message to an address of a server implementing the service for invoking the service. Services deployed to the centralized control point may be converged, the proxy service is a service released to the outside through the convergence, and due to the convergence, one proxy service may be split into at least one direct service.

In Step 220, the centralized control point forwards the direct service request to a service providing object.

In the following, functions of the centralized control point are simply introduced. The centralized control point mainly completes connecting and routing the service, and returns an invoked result of the service to the service consumer, such that the service consumer completes invoking the service. When a Web Service is used for implementation, interfaces of the service are standardized, and how the service (for example, a software service) is invoked is described by using a Web Services Description Language (WSDL) file. For the functions, the centralized control point generally may implement the functions including a connecting function, a transferring function, a routing function, and a converting function. The connecting function refers to that various services are connected to the centralized control point; the transfer function refers to that the centralized control point may support various transfer protocols or message bearer protocols, for example, Hypertext Transfer Protocol (HTTP); the routing function refers to that the centralized control point routes the message to the correct service providing object; and the converting function includes protocol conversion and message format conversion.

After receiving the service request message from the service consumer, the centralized control point usually performs the message routing, format conversion, and transfer protocol conversion according to a certain policy, so as to send the service request message to the service providing object.

In Step 230, the centralized control point receives a direct service response message returned by the service providing object.

After receiving the service request forwarded by the centralized control point, the service providing object performs a service computation, for example, information query, and other functions, and then returns the direct service response message to the centralized control point according to a query result. The service consumption is a message mechanism, and content of the direct service response message indicates whether the direct service is successfully invoked. Generally, if the direct service is successfully invoked, the content of the direct service response message is usually the requested direct service; and if the direct service is unsuccessfully invoked, the content of the direct service response message is usually information that the service is unsuccessfully invoked and a cause of the failure.

In Step 240, the centralized control point forwards the direct service response message to the service consumer.

For example, after receiving the direct service response message, the centralized control point performs the format conversion and transfer protocol conversion, and then sends the direct service response message to the service consumer requesting the service.

In Step 250, the centralized control point generates a CDR according to the content of the direct service response message.

For example, if the content of the direct service response message indicates that the service is successfully invoked, the centralized control point generates the CDR, and records a user identifier (ID) of the service consumer, a name of the invoked direct service, and information that the service is successfully invoked in the CDR. If the content of the direct service response message indicates that the direct service is unsuccessfully invoked, the centralized control point generates the CDR, and records the user ID of the service consumer, the name of the invoked direct service, and information that the service is unsuccessfully invoked in the CDR. It should be noted that in this embodiment, the time of generating the CDR may be flexible according to practical demands. For example, the centralized control point may generate the CDR when receiving the direct service response message, or generate the CDR after forwarding the direct service response message to the service consumer. For the latter one, if the content of the direct service response message indicates that the service is successfully invoked, but failure occurs when the direct service response message is forwarded to the service consumer, such that the response message is unsuccessfully forwarded, the information that the service is unsuccessfully invoked may be recorded in the generated CDR.

One user may have a plurality of application programs, such that the plurality of application programs of one service consumer needs to invoke the service of the service provider. Therefore, in order to make the CDR more detailed, an ID of a specific application program of the service consumer invoking the service may be recorded in the CDR. Definitely, in addition to the above content, other contents, for example, invoking time, message size, and protocol version, may also be recorded in the CDR according to practical demands.

It should be noted that in order to further perfect the generated CDR, the CDR may be generated not only when the direct service is successfully invoked but also when the direct service is unsuccessfully invoked. In order to save resources for generating the CDR, the CDR may be generated only when the direct service is successfully invoked, and may not be generated when the direct service is unsuccessfully invoked.

In addition, it should be noted that Step 240 and Step 250 in this embodiment do not necessarily have a precedence order.

In Step 260, the generated CDR is stored.

Usually, the service provider does not query the CDR in real time, but gathers the CDR at intervals, and then charges the service consumer according to a certain charging policy and the CDR, such that the CDR generated by the centralized control point in real time may be stored for being used by the service provider when necessary. Definitely, the service provider may query the CDR in real time. When the service provider queries the CDR in real time, Step 260 may be omitted.

When it is necessary to store the CDR, several modes for storing the CDR exist, for example, the CDR generated by the centralized control point is stored locally, which is quite convenient, and the generated CDR may be delivered to a remote charging/billing server for being stored, thereby alleviating storage burdens of the centralized control point.

If the generated CDR is delivered to the remote charging/billing server for being stored, the centralized control point needs to support a standard CDR transfer protocol, for example, File Transfer Protocol (FTP) or FTP over Secure socket layer (FTPS). In order to make the charging/billing server clearly store various CDRs, the centralized control point may name each CDR, in which a file name of the CDR needs to be unique. In addition, when a connection between the centralized control point and the charging/billing server is broken, it is preferred that the centralized control point may temporarily store the generated CDR, and actively retransmit the CDR to the charging/billing server after the connection is recovered.

Several modes for delivering the CDR exist, for example, 1) a periodical delivering mode, in which the centralized control point delivers the generated CDR file to the charging/billing server at each fixed time interval, and an advantage of the delivering mode is that it is regular and thus helpful for the service provider to periodically gather the CDR; and 2) a delivering mode with a fixed length, in which when the CDR generated by the centralized control point achieves a certain size, the centralized control point delivers the generated CDR to the charging/billing server, and an advantage of the delivering mode is that the file capability is relatively full when the CDR is sent for once and thus the delivery resources are saved.

It should be additionally described that although in the first embodiment, the centralized control point in the SOA invokes the service by forwarding the service request and the response message, the practical applications are not limited thereto. Technical solutions, in which as long as the centralized control point may complete invoking the service for the service consumer, are applicable to the present invention, such that the centralized control point generates the CDR according to the invoked result of the service.

Further, the specific implementation mode in which the centralized control point generates the CDR according to the invoked result of the service is not limited to the mode in which the centralized control point generates the CDR according to the content of the response message. For example, it may be agreed by the service provider and the service consumer in advance that after receiving the response message forwarded by the centralized control point, the service consumer needs to return acknowledgement information for acknowledging whether the service consumer successfully receives the corresponding service to the centralized control point, such that the centralized control point generates the CDR according to the acknowledgement information returned by the service consumer.

It may be known from the above embodiment and the additional description that after invoking the service for the service consumer, the centralized control point in the SOA generates the CDR according to the invoked result of the service, such that the service provider may be well informed of a service using state of the service consumer, in which the service using state includes information of who is using the service and information of which services are used, so as to settle a basis for the service provider to provide the paid service.

The centralized control point of the embodiment has different implementation modes in different application environments. As long as a service provider performs centralized control on the service provided to the outside through a certain point, the control point may be called the centralized control point in the SOA, for example, the centralized control point may be an ESB bus in the SOA, a Common Object Request Broker Architecture (CORBA) bus, or a cloud server that provides a cloud computing service in a cloud computing mode (the cloud server may charge based on the information about which external users are using the service provided by the enterprise is used by some). In order to further introduce the present invention, several specific implementations of the present invention are given in the following. In the specific implementations of the present invention, a more detailed description is given by taking the ESB bus as an example, and the implementation solutions of other types of centralized control points are the same, which will not be described herein again.

Firstly, a first specific implementation of the service charging method according to the present invention is introduced. In the first specific implementation, a software service consumer invokes a software service through an ESB invoking mode.
(1) A service consumer sends a request message to the ESB, to request a certain software service (in this specific implementation, the software service as a direct service is taken as an example).
   The request message may be a synchronous message or an asynchronous message. A name of the request message is usually determined when the service provider releases the service.
(2) After receiving the request message, the ESB performs message routing, format conversion, and transfer protocol conversion according to a certain policy, and sends the request message to the software service providing object.
(3) The software service providing object performs service computation, for example, information query, and returns a response message to the ESB.
(4) After receiving the response message, the ESB performs the format conversion and the transfer protocol conversion, and sends the response message to a primary service requester.
(5) The ESB generates a CDR according to whether the service is successfully invoked. No matter whether the service is successfully invoked, the CDR is recorded, and only the recorded contents are different. If the service is successfully invoked, information that the service is successfully invoked is recorded in the CDR, and if the service is unsuccessfully invoked, information that the service is unsuccessfully invoked is recorded in the CDR.

The content of the CDR may be flexibly configured according to practical demands, for example, the CDR in which the charging is performed based on using information of a Web Service may include the content in the following.
1. Time stamp: detailed time of using the Web Service.
2. User ID: a user ID of a user using the Web Service, that is, the software service consumer.
3. Application program ID: one service consumer may have a plurality of application programs, and the plurality of programs may need to invoke the Web Service of the software service provider (for example, an independent software provider), such that in order to present more detailed information of the service consumer in the CDR, the application program ID of the service consumer may be given, to indicate which application program(s) of the service consumer uses (use) the service.
4. Service operation name: the name of the requested service, adapted to identify which service is invoked.
5. Port name: in the SOA, the software provider releases the service by using a WSDL file, and the port is one attribute in the WSDL file and describes binding information of the service provider.
6. Operation result: indicating whether the service is successfully invoked, and also giving the cause of the failure when the service is unsuccessfully invoked.
7. Message size: in the SOA, the service is provided through the message, such that the size of the message providing the service may be given.
8. Protocol version.

It may be known that in the specific implementation of the present invention, the CDR generated by the ESB may include various contents according to practical demands. It should be understood by persons in the art that the contents may be acquired by the ESB through the service request received from the service consumer and the response message received from the service providing object.
(6) The ESB delivers the bill to the charging/billing server for being stored according to the pre-configured delivering mode (for example, the periodic mode or the mode with the fixed length), such that the service provider performs the charging for the service consumer, and collects the corresponding fees according to the charging policy and various CDRs stored in the charging/billing server.

Next, a second specific implementation of the service charging method according to the present invention is introduced. In the second specific implementation, the software service consumer invokes the software service by using a subscribing/notifying mode through the ESB.
(1) The service consumer sends a subscription request message to the ESB, to request to subscribe to a certain software service (in this specific implementation, the software service as a direct service is taken as an example).
(2) After receiving the subscription request message of the service, the ESB performs the message routing, format conversion, and transfer protocol conversion according to a certain policy, and then sends the request message to the software service providing object.
(3) The service providing object acknowledges the subscription, and returns a subscription response message indicating whether the subscription is successful to the ESB.
(4) The ESB sends the subscription response message indicating whether the subscription is successful to the service consumer subscribing to the service, and the ESB generates the CDR for service subscription according to the content of the response message.
(5) When the service required by the service consumer is successfully subscribed, the service provider provides the corresponding service (the service may be provided in parts for many times) for the service consumer on appropriate occasions, that is, sends a service notification message to the ESB, in which content of the service notification message is the service requested by the service consumer.
(6) The ESB forwards the service notification message to the service consumer, and generates the CDR for service notification according to the content of the service notification message.

It may be known that in the second implementation, substantially, two response messages are generated for the subscription request message from the service consumer, in which the response messages are the subscription response message and the service notification message. Further, the ESB generates two CDRs, that is, the CDR for service subscription and the CDR for service notification, and the CDR, according to which the service provider subsequently performs the charging for the service consumer, is determined according to practical demands. If the service provider only needs to charge the service according to one CDR (the CDR for service subscription or the CDR for service notification), the ESB may only generate the CDR for service subscription according to the subscription response message or generate the CDR for service notification according to the service notification message.

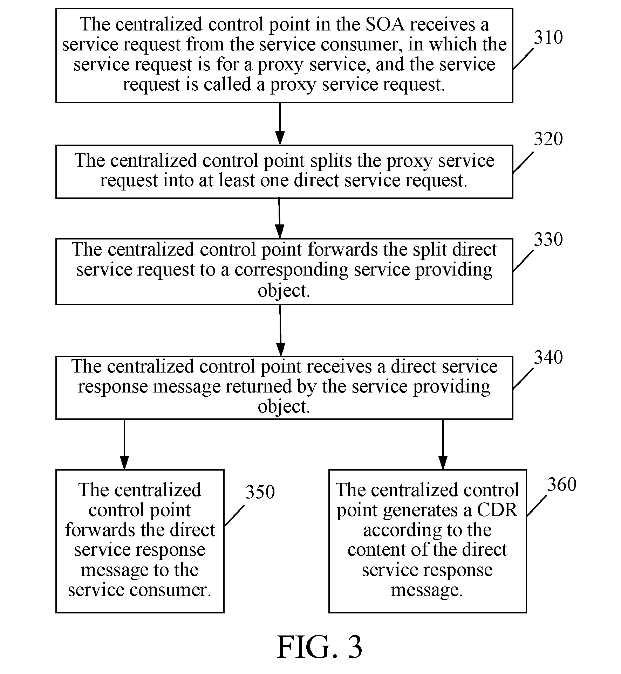

FIG. 3 is a flow chart of a second embodiment of the service charging method according to the present invention. The difference between this embodiment and the first embodiment is that, in this embodiment, the service requested in the service request received by the centralized control point is a proxy service instead of the direct service. In this case, the centralized control point needs to split the proxy service requested in the received service request into at least one direct service, and then forwards the direct service request message to the service providing object providing the direct service, which is described in detail in the following. In this embodiment, the difference between this embodiment and the first embodiment is described in detail, and the similar parts will not be described herein again.

In Step 310, the centralized control point in the SOA receives a service request from the service consumer, in which the service request is for a proxy service, and for ease of subsequent description, the service request for the proxy service is called a proxy service request.

In Step 320, the centralized control point splits the proxy service request into at least one direct service request, and each direct service request is for a direct service.

According to different practical situations, one proxy service request may only be split into one direct service request, or one proxy service request may be split into at least two direct service requests. For example, a proxy service request is for a proxy service C, and the proxy service C substantially includes a service A and a service B. In this case, the centralized control point splits the service request for the proxy service C into two direct service requests, one is the direct service request for the service A, and the other is the direct service request for the service B.

In Step 330, the centralized control point forwards the split direct service request to the corresponding service providing object.

For example, if in Step 320, the proxy service request is split into two direct service requests, that is, the first direct service request (requesting the service A) and the second direct service request (requesting the service B), the centralized control point sends the first direct service request to a first service providing object providing the service A, and sends the second direct service request to a second service providing object providing the service B.

In Step 340, the centralized control point receives the direct service response message returned by the service providing object.

For example, the centralized control point receives a first direct service response message returned by the first service providing object, and a second direct service response message returned by the second service providing object. Definitely, if in Step 320, the proxy service request is only split into one direct service request, the centralized control point in this step correspondingly only receives one direct service response message.

In Step 350, the centralized control point forwards the direct service response message to the service consumer.

Specifically, the centralized control point converts the direct service response message to a proxy service response message, and then sends the proxy service response message to the service consumer. The specific procedure of this step may have many implementation modes according to specific practical situations (for example, the types of the messages are different), for example, a certain direct service response message is converted to the proxy service response message, and then the proxy service response message is sent to the service consumer; or at least two direct service response messages are converged to generate a proxy service response message, and then the proxy service response message is sent to the service consumer. For the specific implementation modes of this step, persons skilled in the art may refer to related technologies in the existing SOA, which will not be described herein again.

In Step 360, the centralized control point generates the CDR according to the content of the response message. The specific implementation of this step may have several modes according to practical demands.

For example, the centralized control point may respectively generate the CDR according to the content of each direct service response message. Specifically, the centralized control point generates the CDR for the invoked service A according to the content of the first direct service response message, and generates the CDR for the invoked service B according to the content of the second direct service response message. It should be understood that the CDR is substantially acquired according to the invoked result of the direct service, that is, the CDR is substantially acquired according to the content of the direct service response message. The content of the CDR acquired according to the content of the direct service response message is the same as the first embodiment, so the details will not be given herein again.

Further, for example, the centralized control point generates the CDR according to the content of the proxy service response message. Specifically, the centralized control point generates one CDR for the entire proxy service (for example, including the service A and the service B) according to the content of the proxy service response message. It should be understood that although on the surface, the CDR is for the proxy service response message, the CDR is generated according to the content of the proxy service response message, and the content of the proxy service response message is substantially acquired according to the content of each direct service response message, such that the CDR is substantially generated according to the invoked result of the direct service.

The content of the response message received by the centralized control point may indicate that the service is successfully invoked (for example, the content of the response message is the service requested to be invoked), and may also indicate that the service is unsuccessfully invoked, such that when the content of the proxy service response message indicates that the proxy service is successfully invoked, the CDR is generated, and the user ID of the service consumer, the name of the invoked proxy service, and the information that the service is successfully invoked are recorded in the CDR. Optionally, in order to make the CDR more detailed, when the proxy service is unsuccessfully invoked, the CDR may also be generated. For example, when the content of the proxy service response message indicates that the proxy service is unsuccessfully invoked, the CDR is generated, and the record user ID of the service consumer, the name of the invoked proxy service, and the information that the service is unsuccessfully invoked are recorded in the CDR.

If one proxy service includes at least two direct services, when the CDR is generated according to the content of the proxy service response message, the process that the information indicating whether the proxy service is successfully invoked is recorded in the CDR needs to have many implementation modes according to the accounting policy of the service provider. For example, it may be specified that only when all the direct services of the proxy service are successfully invoked, the information that the proxy service is successfully invoked is recorded; or, for the part of the information indicating whether the proxy service is successfully invoked recorded in the CDR, the invoked situation of each direct service is respectively recorded.

Being the same as the first embodiment, the specific implementation mode in which the centralized control point in the SOA invokes the service for the service consumer includes, but is not limited to, implementation by forwarding the service request and the response message. Technical solutions, in which as long as the centralized control point may complete invoking the service for the service consumer, are applicable to the present invention, such that the centralized control point generates the CDR according to the invoked result of the service.

Further, the specific implementation mode in which the centralized control point generates the CDR according to the invoked result of the service is not limited to the mode in which the centralized control point generates the CDR according to the content of the response message. For example, it may be agreed by the service provider and the service consumer in advance that after receiving the response message forwarded by the centralized control point, the service consumer needs to return the acknowledgement information for acknowledging whether the service consumer successfully receives the corresponding service to the centralized control point, and thus the centralized control point generates the CDR according to the acknowledgement information returned by the service consumer.

It may be known from the embodiment and the alternative solution that after invoking the service for the service consumer, the centralized control point in the SOA generates the CDR according to the invoked result of the service, such that the service provider may be well informed of a service using state of the service consumer, in which the service using state includes information of who is using the service and information of which services are used, so as to settle a basis for the service provider to provide the paid service. Further, the centralized control point may split one proxy service request into a plurality of direct service requests, so as to invoke the corresponding direct services, and generate the CDR according to the invoked result of the direct services, such that this embodiment is not only applicable to an application environment in which merely the direct service is invoked, but also applicable to an application environment in which the proxy service is invoked.

It should be understood by persons skilled in the art that the method according to the present invention is implemented through hardware and/or software. The software may be stored in a computer readable medium, and when the software is run, the method includes the following steps. The centralized control point in the SOA receives the service request from the service consumer; the centralized control point invokes the requested service for the service consumer according to the service request; and the centralized control point generates the CDR according to the invoked result of the service. The readable medium may be a ROM/RAM, a magnetic disk, or an optical disk.

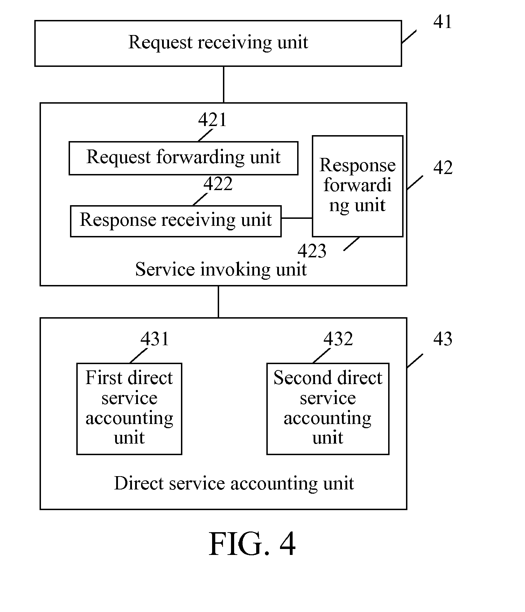

FIG. 4 is a structural view of a first embodiment of a centralized control device in SOA according to the present invention. The centralized control device in this embodiment includes a request receiving unit 41, a service invoking unit 42, and a direct service accounting unit 43. The internal structure and connecting relations of the centralized control device are introduced in detail below in combination with its working principle.

The request receiving unit 41 is adapted to receive a service request from a service consumer, and in this embodiment, the service request as a direct service request is taken as an example. Further, the service invoking unit 42 is adapted to invoke a requested service for the service consumer according to the direct service request. Several specific implementation modes of the service invoking unit 42 exist, which include, but are not limited to, the following. The service invoking unit 42 includes a request forwarding unit 421, a response receiving unit 422, and a response forwarding unit 423. The request forwarding unit 421 is adapted to forward the direct service request to the service providing object, for example, perform regular format conversion and transfer protocol conversion on the direct service request and then send the direct service request to the service providing object. After performing a corresponding process, the service providing object sends a response message to the centralized control point. As such, the response receiving unit 422 is adapted to receive the direct service response message returned by the service providing object. Further, the response forwarding unit 423 is adapted to forward the direct service response message to the service consumer, specifically, the response forwarding unit 423 performs the regular format conversion and transfer protocol conversion on the direct service response message and sends the direct service response message to the service consumer.

The service invoking unit 42 invokes the corresponding direct service for the service consumer according to the direct service request, such that the direct service accounting unit 43 may generate a CDR according to an invoked result of the direct service. Several specific implementation modes of the direct service accounting unit 43 exist, for example, the direct service accounting unit 43 may include a first direct service accounting unit 431 and a second direct service accounting unit 432.

The first direct service accounting unit 431 is adapted to generate the CDR when the direct service is successfully invoked, and record a user ID of the service consumer, a name of the invoked direct service, and information that the service is successfully invoked in the CDR. For example, the first direct service accounting unit 431 generates the CDR when the content of the direct service response message indicates that the direct service is successfully invoked.

The time of generating the CDR may be flexible according to demands. For example, the first direct service accounting unit 431 may generate the CDR when the response receiving unit 422 receives the direct service response message, or generate the CDR after the response forwarding unit 423 forwards the direct service response message to the service consumer. For the latter one, if the content of the direct service response message indicates that the service is successfully invoked, but failure occurs when the direct service response message is forwarded to the service consumer, such that the response message is unsuccessfully forwarded, the information that the service is unsuccessfully invoked may be recorded in the generated CDR.

Further, for example, it may be agreed by the service provider and the service consumer in advance that after receiving the response message forwarded by the centralized control point, the service consumer needs to return acknowledgement information for acknowledging whether the service consumer successfully receives the corresponding service to the centralized control point, such that the first direct service accounting unit 431 generates the CDR according to the acknowledgement information returned by the service consumer, and records the information indicating whether the requested service is successfully invoked in the CDR.

The second direct service accounting unit 432 is adapted to generate the CDR, and record the user ID of the service consumer, the name of the invoked direct service, and information that the service is unsuccessfully invoked in the CDR, when the direct service is unsuccessfully invoked. Definitely, in order to save resources, the CDR may only be generated when the service is successfully invoked, and in this case, the direct service accounting unit 43 only includes the first direct service accounting unit 431. Specific content of the CDR may include, but is not limited to, the user ID of the service consumer, the name of the invoked direct service, and the information that the service is successfully or unsuccessfully invoked, and may also include a time stamp and an application program ID of the service consumer.

It may be known from the above embodiment that the direct service accounting unit 43 generates the CDR according to the invoked result of the service provided by the service invoking unit 42, such that the service provider may be well informed of a service using state of the service consumer, in which the service using state includes information of who is using the service and information of which services are used, so as to settle a basis for the service provider to provide the paid service.

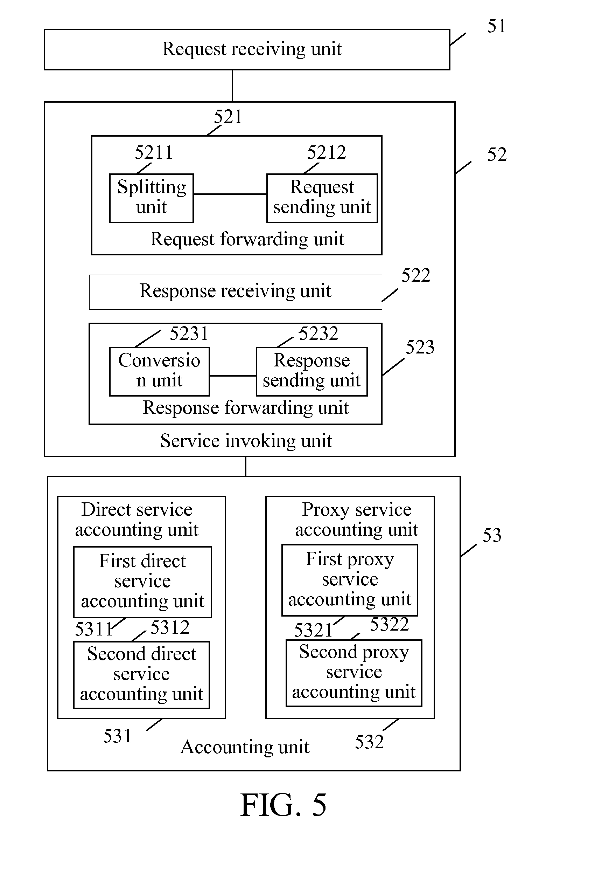

FIG. 5 is a structural view of a second embodiment of the centralized control device in the SOA according to the present invention. The centralized control device in this embodiment may not only process the direct service request, but also process a proxy service request. The centralized control device in this embodiment includes a request receiving unit 51, a service invoking unit 52, and an accounting unit 53.

The request receiving unit 51 is adapted to receive the service request from the service consumer, and in the embodiment of FIG. 4, the technical solution of processing the direct service request is introduced in detail, such that in this embodiment, the service request as the proxy service request is taken as an example.

Several specific implementation modes of the service invoking unit 52 exist, which include, but are not limited to, the following. The service invoking unit 52 includes a request forwarding unit 521, a response receiving unit 522, and a response forwarding unit 523.

Specifically, the request forwarding unit 521 includes a splitting unit 5211 and a request sending unit 5212. The splitting unit 5211 is adapted to split the proxy service request into at least one direct service request, and the request sending unit 5212 is adapted to send the split direct service request to the service providing object.

After the request sending unit 5212 sends the direct service request to the corresponding service providing object, the centralized control device receives the direct service response message returned by the service providing object. Specifically, the response receiving unit 522 is adapted to receive the direct service response message returned by the service providing object. The response receiving unit 522 may receive one or more direct service response messages.

Afterwards, the response forwarding unit 523 is adapted to forward the received direct service response message to the service consumer. Specifically, the response forwarding unit 523 includes a conversion unit 5231 and a response sending unit 5232. The conversion unit 5231 is adapted to convert the direct service response message to the proxy service response message, for example, may convert a direct service response message to a proxy service response message, or converge at least two direct service response messages to generate a proxy service response message. The response sending unit 5232 is adapted to send the converted proxy service response message to the service consumer.

The service invoking unit 52 invokes the service requested by the service consumer, and acquires the invoked result of the requested service, such that the accounting unit 53 may generate the CDR according to the invoked result of the service provided by the service invoking unit 52. Several specific implementation modes of the accounting unit 53 exist, for example, the accounting unit 53 includes not only a direct service accounting unit 531 but also a proxy service accounting unit 532, or may only include any one of the accounting units.

For example, the direct service accounting unit 531 is adapted to respectively generate the CDR according to the content of each direct service response message received by the service invoking unit 52. The direct service accounting unit 531 includes a first direct service accounting unit 5311 and a second direct service accounting unit 5312, and the structure of the direct service accounting unit 531 is the same as the structure of the direct service accounting unit 43 in FIG. 4, the details of which may not be described herein again. It should be noted that the response receiving unit 522 in this embodiment may receive a plurality of direct service response messages of the service providing object based on one proxy service request from the service consumer, such that the direct service accounting unit 531 may generate a CDR based on each direct service response message.

The proxy service accounting unit 532 is adapted to generate the CDR according to the content of the proxy service response message generated by the service invoking unit 52. Similar to the direct service accounting unit 531, the proxy service accounting unit 532 includes a first proxy service accounting unit 5321 and a second proxy service accounting unit 5322 (optional). The first proxy service accounting unit 5321 is adapted to generate the CDR, and record the user ID of the service consumer, the name of the invoked proxy service, and the information that the service is successfully invoked in the CDR, when the content of the proxy service response message indicates that the proxy service is successfully invoked. The second proxy service accounting unit 5322 is adapted to generate the CDR, and record the user ID of the service consumer, the name of the invoked proxy service, and the information that the service is unsuccessfully invoked in the CDR, when the content of the proxy service response message indicates that the proxy service is unsuccessfully invoked.

It should be noted that if one proxy service includes at least two direct services, when the CDR is generated according to the content of the proxy service response message, the process that the information indicating whether the proxy service is successfully invoked is recorded in the CDR needs to have many implementation modes according to the accounting policy of the service provider. For example, it may be specified that only when all the direct service of the proxy service are successfully invoked, the information that the proxy service is successfully invoked is recorded; or, for the part of the information indicating whether the proxy service is successfully invoked recorded in the CDR, the invoked situation of each direct service is respectively recorded.

It should be further noted that if the service request received by the request receiving unit 51 is the direct service request, the processing of the splitting unit 5211, the conversion unit 5231, and the proxy service accounting unit 532 is not required.

In addition, if the service provider does not query the CDR in real time, but gathers the CDR at intervals, the CDR generated by the accounting unit 53 needs to be stored. Several specific storage modes exist, the CDR may be stored locally, or may also be stored in a charging/billing server in communication with the centralized control device. If the CDR is stored locally, the centralized control device further includes a storage unit, adapted to store the CDR generated by the accounting unit 53 locally. If the CDR is stored in the charging/billing server, the centralized control device further includes a bill delivering unit, adapted to deliver the CDR generated by the accounting unit 53 to the connected charging/billing server. Definitely, if the service provider queries the CDR in real time, the CDR does not need to be stored, that is, the storage unit or the bill delivering unit is not required.

It is known from the above embodiment as shown in FIG. 5 that the accounting unit 53 generates the CDR according to the invoked result of the service provided by the service invoking unit 52, such that the service provider may be well informed of a service using state of the service consumer, in which the service using state includes information of who is using the service and information of which services are used, so as to settle a basis for the service provider to provide the paid service. Further, the service invoking unit 52 may split one proxy service request into a plurality of direct service requests, so as to invoke the corresponding direct services, and the accounting unit 53 generates the CDR according to the invoked result of the services provided by the service invoking unit 52, such that the centralized control device in this embodiment is not only applicable to an application environment in which merely the direct service is invoked, but also applicable to an application environment in which the proxy service is invoked.

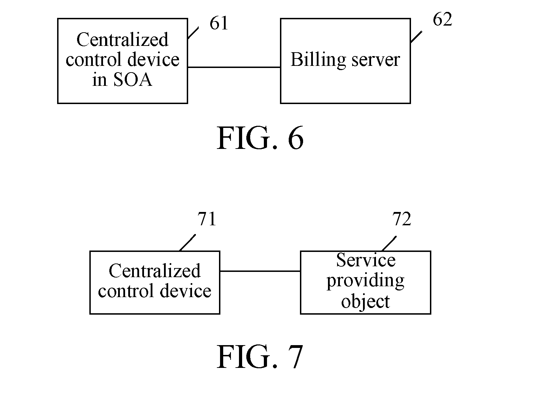

In addition, the present invention further provides a charging system, as shown in FIG. 6. The charging system in this embodiment includes a centralized control device 61 in SOA and a charging/billing server 62 connected to the centralized control device 61. The charging/billing server 62 is adapted to store a CDR delivered by the centralized control device. The internal structure of the centralized control device 61 may refer to the first embodiment and the second embodiment of the centralized control device, and the details may not be described herein again. The charging system in this embodiment may remotely and uniformly store the CDR generated by the centralized control device 61, such that the burdens of the centralized control device are alleviated and the service provider can conveniently and uniformly manage the CDR.

The present invention further provides a service providing system, as shown in FIG. 7. The service providing system in this embodiment includes a centralized control device 71 in SOA and a service providing object 72. The service providing object 72 is adapted to provide a requested service for the centralized control device 71, and the service providing object 72 may be not only an independent server or other devices, and may also be integrated in the centralized control device 71. The internal structure of the centralized control device 71 may refer to each embodiment of the centralized control device, and the details may not be described herein again. The specific implementation modes of the service providing object may refer to the related prior art, and the details may not be described herein again.

It should be noted that the structural division of the device or system is based on a logic perspective. In practical applications, each unit may be combined according to demands, and may also be split according to demands.

It may be known from the embodiments that after invoking the service for the service consumer, the centralized control point in the SOA generates the CDR according to the invoked result of the service, such that the service provider may be well informed of a service using state of the service consumer, in which the service using state includes information of who is using the service and information of which services are used, so as to settle a basis for the service provider to provide the paid service.

Further, if the service is invoked by forwarding the service request and the response message, and the centralized control point generates the CDR according to the content of the response message, the accuracy of the generated CDR is ensured.

In addition, the centralized control point may split one proxy service request into a plurality of direct service requests, so as to invoke the corresponding direct services, and generate the CDR according to the invoked result of the direct services, such that the present invention is not only applicable to an application environment in which merely the direct service is invoked, but also applicable to an application environment in which the proxy service is invoked.

The implementation of the present invention does not limit the protection scope of the present invention. Any modification, equivalent replacement, or improvement made without departing from the spirit and principle of the present invention should fall within the scope of the present invention.

## Claims

1. A service charging method, comprising:
receiving, by a centralized control point in Service Oriented Architecture (SOA), a service request from a service consumer;
invoking, by the centralized control point, a requested service for the service consumer according to the service request; and
generating, by the centralized control point, a Call Detail Record (CDR) according to an invoked result of the service.

2. The method according to claim 1, wherein the service request is a proxy service request for a proxy service, and the invoking, by the centralized control point, the requested service for the service consumer according to the service request comprises: splitting, by the centralized control point, the proxy service request into at least one direct service request; forwarding the split direct service request to a corresponding service providing object; receiving a response message returned by the service providing object; and forwarding the response message to the service consumer; and
the generating, by the centralized control point, the CDR according to the invoked result of the service comprises: generating, by the centralized control point, the CDR according to the invoked result of a direct service.

3. The method according to claim 1, wherein the service request is a direct service request for a proxy service, and the invoking, by the centralized control point, the requested service for the service consumer according to the service request comprises: forwarding, by the centralized control point, the direct service request to a service providing object; receiving a response message returned by the service providing object; and forwarding the response message to the service consumer; and
the generating, by the centralized control point, the CDR according to the invoked result of the service comprises: generating, by the centralized control point, the CDR according to content of the response message.

4. The method according to claim 1, wherein the generating, by the centralized control point, the CDR according to the invoked result of the service comprises:
generating, by the centralized control point, the CDR, and recording a user identifier (ID) of the service consumer, a name of the invoked service, and information that the service is successfully invoked in the CDR, if the service is successfully invoked.

5. The method according to claim 4, wherein the generating, by the centralized control point, the CDR according to the invoked result of the service comprises:
generating, by the centralized control point, the CDR, and recording the user ID of the service consumer, the name of the invoked service, and information that the service is unsuccessfully invoked in the CDR, if the service is unsuccessfully invoked.

6. The method according to any one of claims 1 to 5, wherein after the generating, by the centralized control point, the CDR, the method comprises storing the generated CDR.

7. The method according to claim 6, wherein the storing the generated CDR comprises:
delivering the generated CDR to a charging/billing server for being stored; or
storing the generated CDR locally.

8. The method according to any one of claims 1 to 5, wherein the centralized control point comprises an Enterprise Service Bus (ESB), a Common Object Request Broker Architecture (CORBA) bus, or a cloud server.

9. A centralized control device in Service Oriented Architecture (SOA), comprising:
a request receiving unit, adapted to receive a service request from a service consumer;
a service invoking unit, adapted to invoke a requested service for the service consumer according to the service request; and
an accounting unit, adapted to generate a Call Detail Record (CDR) according to an invoked result of the service.

10. The centralized control device according to claim 9, wherein the service request received by the receiving unit is a proxy service request for a proxy service, and the service invoking unit comprises: a splitting unit, adapted to split the proxy service request into a direct service request; a request sending unit, adapted to forward the split direct service request to a corresponding service providing object; a response receiving unit, adapted to receive a response message returned by the service providing object; and a response forwarding unit, adapted to forward the response message to the service consumer; and
the accounting unit is specifically adapted to generate the CDR according to the invoked result of a direct service.

11. The centralized control device according to claim 9, wherein the service request received by the receiving unit is a direct service request for a proxy service, and the service invoking unit comprises: a request forwarding unit, adapted to forward the direct service request to a service providing object; a response receiving unit, adapted to receive a response message returned by the service providing object; and a response forwarding unit, adapted to forward the response message to the service consumer; and
the accounting unit is specifically adapted to generate the CDR according to content of the response message.

12. The centralized control device according to claim 9, wherein the accounting unit comprises:
a first accounting unit, adapted to generate the CDR, and record a user identifier (ID) of the service consumer, a name of the invoked service, and information that the service is successfully invoked in the CDR, if the service is successfully invoked.

13. The centralized control device according to claim 12, wherein the accounting unit comprises:
a second accounting unit, adapted to generate the CDR, and record the user ID of the service consumer, the name of the invoked service, and information that the service is unsuccessfully invoked in the CDR, if the service is unsuccessfully invoked.

14. The centralized control device according to any one of claims 9 to 13, further comprising: a storage unit, adapted to store the generated CDR locally.

15. The centralized control device according to any one of claims 9 to 13, further comprising:
a bill delivering unit, adapted to deliver the generated CDR to a remote charging/billing server.

16. The centralized control device according to any one of claims 9 to 13, wherein the centralized control point comprises an Enterprise Service Bus (ESB), a Common Object Request Broker Architecture (CORBA) bus, or a cloud server.

17. A charging system, comprising the centralized control device according to claim 15, and a charging/billing server connected to the centralized control device, wherein the charging/billing server is adapted to store a Call Detail Record (CDR) delivered by the centralized control device.

18. A service providing system, comprising a service providing object, and further comprising the centralized control device according to any one of claims 9 to 13, wherein the service providing object is adapted to provide a requested service for the centralized control device.
